(19) Europäisches Patentamt
European Patent Office
Office européen des brevets

(11) EP 4 718 761 A1

(12) EUROPEAN PATENT APPLICATION

(43) Date of publication:
**01.04.2026 Bulletin 2026/14**

(21) Application number: **25202453.4**

(22) Date of filing: **16.09.2025**

(51) International Patent Classification (IPC):
***H04L 1/1822*** (2023.01) ***H04L 1/1829*** (2023.01)
***H04L 1/1867*** (2023.01)

(52) Cooperative Patent Classification (CPC):
**H04L 1/1887; H04L 1/1822; H04L 1/1829; H04L 1/1874**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.09.2024 CN 202411393153**

(71) Applicant: **Nokia Solutions and Networks Oy**
**02610 Espoo (FI)**

(72) Inventors:
- **LI, Bin**
  **Hangzhou (CN)**
- **WEI, Degeng**
  **Hangzhou (CN)**
- **LI, Xin Miao**
  **Hangzhou (CN)**
- **HE, Xianhua**
  **Hangzhou (CN)**

(74) Representative: **Nokia EPO representatives**
**Nokia Technologies Oy**
**Karakaari 7**
**02610 Espoo (FI)**

# (54) DEVICE, METHOD, APPARATUS AND COMPUTER-READABLE MEDIUM FOR COMMUNICATION

(57) Embodiments of the present disclosure provide method, apparatus and computer-readable medium for communications. In the method, the apparatus determines that first data is to be transmitted to a terminal device. In the method, the apparatus further reuses a first hybrid automatic retransmission request (HARQ) process in a stalled state to transmit the first data to the terminal device based on determining that there is no free HARQ process for transmitting the first data.

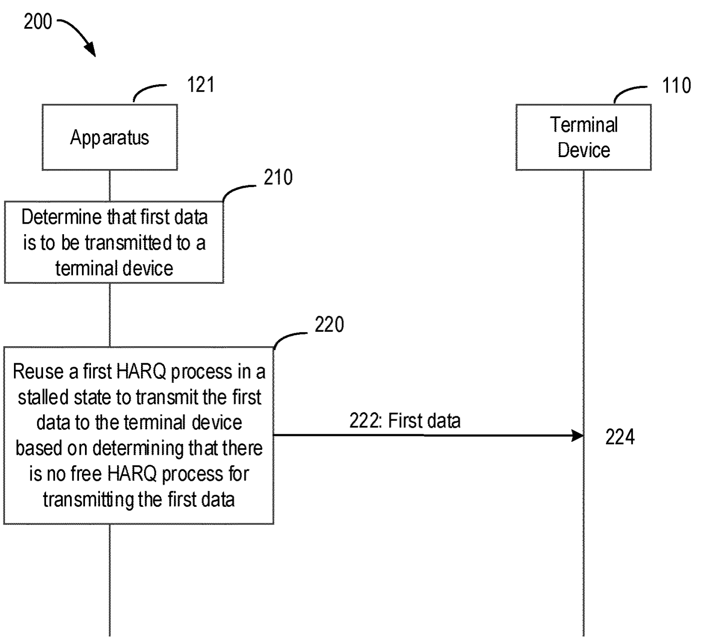


FIG. 2

EP 4 718 761 A1

Processed by Luminess, 75001 PARIS (FR)

## Description

### TECHNICAL FIELD

Various example embodiments relate to the field of communications, and in particular, to a device, a method, an apparatus, and a computer-readable media for communications.

### BACKGROUND

A communication network can be seen as a facility that enables communications between two or more communication devices, or provides communication devices with access to a data network. A mobile or wireless communication network is one example of a communication network.

Such communication networks operate in accordance with standards, such as those promulgated by Third Generation Partnership Project (3GPP) or European Telecommunications Standards Institute (ETSI). Examples of such standards include the so-called 5th generation (5G) standard, 6th generation (6G) standard or other standards promulgated by 3GPP.

### SUMMARY

In general, example embodiments of the present disclosure provide a technical solution for communications, in particular a technical solution for performing a preemptive scheduling using fast HARQ retransmission in the NR system.

In a first aspect, there is provided an apparatus. The apparatus comprises at least one processor and at least one memory storing instructions that, when executed by the at least one processor, cause the apparatus at least to: determine that first data is to be transmitted to a terminal device; and reuse a first hybrid automatic retransmission request (HARQ) process in a stalled state to transmit the first data to the terminal device based on determining that there is no free HARQ process for transmitting the first data.

In a second aspect, there is provided a method. The method comprises: determining that first data is to be transmitted to a terminal device; and reusing a first hybrid automatic retransmission request (HARQ) process in a stalled state to transmit the first data to the terminal device based on determining that there is no free HARQ process for transmitting the first data.

In a third aspect, there is provided an apparatus. The apparatus comprises: means for determining that first data is to be transmitted to a terminal device; and means for reusing a first hybrid automatic retransmission request (HARQ) process in a stalled state to transmit the first data to the terminal device based on determining that there is no free HARQ process for transmitting the first data.

In a fourth aspect, there is provided a computer-readable medium. The computer-readable medium comprises program instructions stored thereon, wherein the program instructions are used for performing at least the method according to the second aspect.

In a fifth aspect, there is provided a computer program comprising instructions. The instructions, when executed by an apparatus, cause the apparatus to perform at least the method according to the second aspect.

In a sixth aspect, there is provided an apparatus. The apparatus comprises: a determining circuitry configured to determine that first data is to be transmitted to a terminal device; and a transmitting circuitry configured to reuse a first hybrid automatic retransmission request (HARQ) process in a stalled state to transmit the first data to the terminal device based on determining that there is no free HARQ process for transmitting the first data.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, in which:

Fig. 1A illustrates an example communication network in which embodiments of the present disclosure may be implemented;
Fig. 1B illustrates an exemplary communication scenario of inter-gNB and intra-gNB carrier aggregations;
Fig. 2 illustrates a signaling diagram of an exemplary communication procedure in accordance with example embodiments of the present disclosure;
Fig. 3A illustrates a schematic diagram of a procedure for calculating HARQ RTT under inter-gNB carrier aggregation;
Fig. 3B illustrates a table of scheduling timing and HARQ RTT under various typical configurations;

Fig. 4 illustrates a schematic diagram of an HARQ scheduling procedure in accordance with example embodiments of the present disclosure;

Fig. 5 illustrates an example of redefinition of the state of the HARQ process in accordance with example embodiments of the present disclosure;

Fig. 6 illustrates an exemplary procedure of HARQ preemptive scheduling in accordance with example embodiments of the present disclosure;

Fig. 7 illustrates an exemplary procedure of fast HARQ retransmission in accordance with the example embodiments of the present disclosure;

Fig. 8 illustrates throughput gain over conventional techniques in accordance with example embodiments of the present disclosure;

Fig. 9 illustrates a flowchart of an example method implemented at an apparatus in accordance with some embodiments of the present disclosure;

Fig. 10 illustrates a simplified block diagram of a device suitable for implementing some example embodiments of the present disclosure; and

Fig. 11 illustrates a block diagram of an example of the computer-readable medium in accordance with some example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of the ordinary skilled in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of those skilled in the art to affect such feature, structure, or characteristic in connection with other embodiments whether or not explicitly described.

It should be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/or combinations thereof. As used herein, "at least one of the following: a list including two or more elements", "at least one in a list including two or more elements" and similar expressions (wherein the list including two or more elements is linked by "and" or "or") indicate at least any one element in the elements, or at least any two elements in the elements or at least a plurality of elements in the elements, or at least all of the elements.

As used in this application, the term "circuitry" may refer to one or more or all of the following:

(a) hardware-only circuit implementations (such as implementations in analog and/or digital circuitry only) and

(b) combinations of hardware circuits and software, such as (as applicable):

- (i) a combination of analog and/or digital hardware circuit(s) with software/firmware and
- (ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of a hardware circuit or processor(s) alone or a portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network devices.

As used herein, the term "communication network" refers to a network conforming to any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network or system may be performed according to communication protocols of any suitable generations, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, the present disclosure of course will be embodied by communication technology and system of future type. It should not be seen as limiting the scope of the present disclosure to only the aforementioned systems.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, a low power node such as a femto, a pico, and so forth, depending on the applied terminology and technology. The network device may further refer to Radio Access Network (RAN) device, Core Network (CN) device, User Plane Function (UPF), Data Network (DN) or server.

The term "terminal device" refers to any terminal device capable of conducting wireless communication. By way of example rather than limitation, a terminal device may also be referred to as a communication device, user equipment, a Subscriber Station, a Portable Subscriber Station, a Mobile Station, or an Access Terminal. The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

Fig. 1A illustrates an example communication network in which embodiments of the present disclosure may be implemented. In Fig. 1A, a communication system 100, as a part of the communication network, includes a terminal device (UE) 110 and at least one network device, e.g., first network device 121 and second network device 122 as shown. The terminal device 110 may be, for example, Internet of Things (IoT) device. The network device may be, for example, a radio access network (RAN) device (such as gNB in 5G as an example) or a communication module thereof. In the communication system 100 shown in Fig. 1A, the first network device 121 has a first cell 131 on a first carrier and the second network device 122 has a second cell 132 on a second carrier. The first cell 131 and the second cell 132 provides communication services to the terminal device 110 within their coverage.

According to Fig. 1A, the terminal device 110 is connected with the network device. In the system 100, a link from the network device to the terminal device 110 is referred to as downlink (DL), while a link from the terminal device 110 to the network device is referred to as an uplink (UL). In the downlink, the network device is a transmitting device (or transmitter) and the terminal device 110 is a receiving device (or receiver). In the uplink, the terminal device 110 a transmitting device (or transmitter) and the network device is a receiving device (or receiver).

It is to be appreciated that the number of the devices (including terminal device 110 and network device) and their connections and types of these devices shown in Fig. 1A are provided only for the purpose of illustration, without suggesting any limitations. The communication system 100 in Fig. 1A may include any suitable number of devices suitable for implementing the embodiments of the present disclosure.

Carrier aggregation (CA) is a technique employed for aggregating a multiple parts of the frequency band in the wireless system. For example, multiple component carriers (CC) (each CC occupying a specific bandwidth of the system bandwidth) may be aggregated for communications between the network device and the terminal device (which is usually referred to as user equipment (UE)). In the carrier aggregation, a carrier for carrying signaling and managing other carriers is referred to as a primary carrier (Pcell), and a carrier for expanding bandwidth and enhancing rate and can be determined to be added or deleted by the primary carrier is referred to as secondary carrier (Scell). The primary and secondary carriers are specified with respect to the terminal and may vary for different terminals.

Inter-gNB carrier aggregation is one of the important scenarios to enhance UE throughput and spectrum usage and improve user experience. The inter-gNB carrier aggregation may support collocated scenarios and non-collocated scenarios. It may support all CA user scenarios defined in Appendix J of 3GPP 38.300. Fig. 1B illustrates an exemplary communication scenario 105 of inter-gNB and intra-gNB carrier aggregations. For the purpose of discussion, the communication scenario 105 is to be described with reference to Fig. 1A. The communication scenario 105 may involve a first network device 121, a second network device 122, one or more cells provided by the first network device 121, one or more cells provided by the second network device 122, and one or more terminal devices 110.

In Fig. 1B, for an inter-gNB carrier aggregation (inter-gNB CA) scenario, the first network device 121 may serve as the primary gNB to provide a primary cell (PCell) in the CA scenario, and the second network device 122 may act as the secondary gNB to provide one or more secondary cells (SCell) in the CA scenario, wherein the primary cell supports both uplink and downlink transmission, and the secondary cell only supports downlink transmission. The first network device 121 and the second network device 122 communicate with each other via the XP link.

It should be noted that the primary cell and the secondary cell are provided by different gNBs respectively in the inter-gNB carrier aggregation case. For example, as shown in Fig. 1B, the primary cell is provided by the first network device 121, while all secondary cells are provided by the second network device 122. However, it should be appreciated that the primary cell may also be provided by different gNBs in other embodiments. In addition, Fig. 1B further illustrates the intra-gNB carrier aggregation (intra-gNB CA) scenario, in which the primary cell and the secondary cell may be provided by the same network device.

In the current NR system, the inter-gNB CA communication may span different base stations. Compared to the intra-gNB CA communication, the link transmission costs more time in the inter-gNB CA communication , resulting a longer hybrid automatic repeat request (HARQ) round trip timer (RTT). Such extension of the RTT leads to a significant delay in the HARQ process feedback. Thereby, before the HARQ feedback is received, all HARQ processes (16 at maximum) supported by 3GPP might be exhausted, resulting into HARQ stalling (or blocking) and suspended scheduling. This may significantly reduce the UE throughput and increase the data transmission latency.

During the HARQ stalling, the UE could not be scheduled, causing physical resource waste and lowered throughput. On the other hand, additional RLC/TCP retransmission may further have potential effects on end-to-end user experience.

At present, there lacks a processing mechanism for the HARQ stalling, which means that it is also impossible to schedule the UE in some timeslots of the HARQ stalling even if the UE has massive new data traffic (such as signaling radio bearer (SRB), guaranteed bit rate (GBR), session initiation protocol (SIP) and non-guaranteed bit rate (non-GBR) and sufficient physical resource blocks (PRB)). The worst-case scenario is that the UE could not be scheduled in all timeslots when all HARQ processes are stalled.

In case that new data have arrived or the existing data are still in a buffer state for transmission, if all HARQ processes are in use, the gNB scheduler need to wait for a free HARQ process to become available, which may waste transmission occasions, decline traffic, and increase transmission delay.

In particular, in the inter-gNB CA scenario, communication between serving cells may cause an increased HARQ RTT, which may exceed the maximum capacity of the available HARQ process. Due to such delay, the HARQ process could not be released in time, thereby the packet is suspended and blocked due to a lack of available HARQ process.

In view of the above issues, some embodiments of the present disclosure introduce a mechanism for performing a preemptive scheduling having fast HARQ retransmission in the NR system. When a serving cell receives the HARQ negative acknowledgement (NACK) feedback too late, e.g., after the corresponding HARQ process has been preempted and re-used for other new transmissions of the UE, a local RLC' (a lower layer RLC mainly responsible for MAC-layer packets and SDU partition etc.) may immediately generate a retransmission MAC PDU, which may be quickly scheduled by the serving cell. This reduces the delay in waiting for the RLC" (higher layer RLC mainly responsible for ARQ transmission and SDU reassembly etc.) to eventually retransmit the PDU. Through the above mechanism, the HARQ retransmission speed can be greatly expedited, improving the end-to-end delay and the TCP throughput level.

Fig. 2 illustrates a signaling diagram of an exemplary communication procedure 200 in accordance with example embodiments of the present disclosure. For the purposes of discussion, the communication procedure 200 is to be described with reference to Fig. 1A. The communication procedure 200 may involve interactions between the terminal device 110 and the first network device 121. In Fig. 2, the first network device 121 may also be referred to as the apparatus 121. In some embodiments, the apparatus 121 may include a base station. In other embodiments, the apparatus 121 may include a chip of the base station.

As shown in Fig. 2, at 210, the apparatus 121 determines that first data is to be transmitted to the terminal device 110. In this embodiment, the first data may refer to a new packet to be transmitted to the terminal device 110.

At 220, the apparatus 121 may reuse a first HARQ process in a stalled state to transmit the first data 222 to the terminal device 110 based on determining that there is no free HARQ process for transmitting the first data 222.

In some embodiments, the apparatus 121 may further second data transmitted previously using the first HARQ process based on reusing the first HARQ process to transmit the first data.

In some embodiments, the apparatus 121 may further delete the stored second data based on determining that HARQ feedback for the second data received from the terminal device 110 is an acknowledgement (ACK).

In some embodiments, the apparatus 121 may delete the stored second data by indicating an index of a transmission block (TB) associated with the second data to a radio link control (RLC) layer of the apparatus 121 by a radio resource management (RRM) scheduler of the apparatus 121, and then releasing a buffer associated with the TB by the RLC layer.

In some embodiments, the apparatus 121 may trigger retransmission of the stored second data at a media access control (MAC) layer based on determining that the HARQ feedback for the second data received from the terminal device 110 is a negative acknowledgement (NACK) or the HARQ feedback is not received from the terminal device 110.

In some embodiments, the apparatus 121 may retransmit the second data, as a new transmission, to the terminal device 110 using a second HARQ process.

In some embodiments, the apparatus 121 may schedule a TB associated with the second data based on a scheduling priority of the terminal device 110 and a scheduling priority of the TB in the terminal device 110. Additionally or alternatively, in some embodiments, the apparatus 121 may schedule the TB based on a link state, physical resource block (PRB) availability and a transmission block size previously used .

In some embodiments, the apparatus 121 may assign the second HARQ process to the TB and set a redundant version (RV) of the TB to a value corresponding to the new transmission. In some embodiments, the RV may be set to 0.

In some embodiments, the apparatus 121 may retransmit the second data in various ways. As an example, the RRM scheduler of the apparatus 121 indicates the physical layer of the apparatus 121 to transmit physical downlink control channel (PDCCH) transmission associated with the second data, as a new transmission, to the terminal device 110. Next, the RRM scheduler indicates the RLC layer of the apparatus 121 to transmit the TB associated with the second data to the physical layer of the apparatus 121. Then, a stored MAC layer protocol data unit (MAC PDU) associated with the second data is retransmitted to the physical layer by the RLC layer.

In some embodiments, the apparatus 121 may determine that the first HARQ process is in the stalled state based on determining that HARQ feedback time of the first HARQ process is greater than a first duration and smaller than a second duration. The first duration may indicate a non-stalled duration of the HARQ process and the second duration may indicate the duration of the whole HARQ process.

In some embodiments, the first duration may include a schedule advance, a downlink HARQ feedback window, a layer 1 receiving window, an HARQ process delay, and an XP link delay for exchanging HARQ feedback between multiple serving cells of the terminal device. In some embodiments, the second duration may include the first duration and a timing offset relative to the first duration.

In some embodiments, the apparatus 121 may trigger retransmission of the stored second data at the MAC layer based on determining that the HARQ feedback time is greater than the second duration.

In some embodiments, in case that there are multiple HARQ processes in the stalled state, the apparatus 121 may select, from the multiple HARQ processes, a target HARQ process as the first HARQ process to be reused based on at least one of: (i) time sequence of occurrence of the stalled state of the multiple HARQ processes, or (ii) multiple priorities of multiple data associated with the multiple HARQ processes.

In some embodiments, in case that an HARQ process in the stalled state is associated with at least one of signaling radio bearer (SRB) data or guaranteed bit rate (GBR) data, the apparatus 121 may refrain from determining the HARQ process as the first HARQ process to be reused.

In some embodiments, the apparatus 121 may provide the primary cell of the inter-base station (e.g., gNB of 5G) carrier aggregation for the terminal device 110. Alternatively, the apparatus 121 may further provide the primary cell and the secondary cell of the intra-base station carrier aggregation for the terminal device 110. Alternatively, the apparatus 121 may further provide a non-carrier aggregation cell for the terminal device 110.

Fig. 3A illustrates a schematic diagram of a procedure for calculating HARQ RTT under inter-gNB carrier aggregation. As shown in Fig. 3A, the value of the HARQ RTT may be calculated by summing a schedule advance, a downlink hardware delay (HWDelayDL), a downlink HARQ feedback window (also referred to as K1 value), a layer-1 receiving window, a message delay between layer 1 and layer 2 (msgL1L2 delay), a XP link delay between the primary gNB and the secondary gNB, and a maximum message process delay. Moreover, the value of the HARQ RTT is also related to the maximum number of the HARQ process. These concepts are interpreted as follows:

Schedule advance: refers to adjustments to transmission timing within the system by the scheduler to ensure efficient and synchronous communications via air interfaces. In some embodiments, a value of the schedule advance may

be 1000μs.

HWDelayDL: one-way hardware delay from CPRI/eCPRI interface of layer 1 to antenna connector, or one-way hardware delay from CPRI/eCPRI interface in the antenna connector to the layer 1. In some embodiments, a value of HWDelayDL may be 500μs.

Maximum K1 value: a maximum value of K1. K1 is a value in a timing list from a given PDSCH to DL acknowledgement (see Clause 9.1.2 in TS 38.213 [13]). The configuration shown in Fig. 3B below uses a TDD frame structure with 8:2 (DL:UL) configuration. The value is 1, and each timeslot lasts for 500us.

Layer 1 (L1) receiving window: a product-defined duration for layer 1 to complete uplink air interface data decoding. In some embodiments, a value of the layer 1 receiving window may be 1400μs.

msgL1L2delay: communication delay of internal interface message(s) between layer 1 and layer 2 on the same board. In some embodiments, a value of msgL1L2delay may be 20μs.

XP link delay: a transmission delay of XP link between primary gNB and secondary gNB. XP link is a link for communicating and exchanging CA scheduling information between gNBs and has the same transmission capacity as F1 and X2. In Fig. 3A, the value of the XP link delay may be 1400μs.

Maximum message process delay: a maximum time for processing the received messages. In inter-gNB carrier aggregation scenarios, the maximum message process delay includes the time (about 100μs) for the primary cell to decode original bit information, and the time (about 100μs) for the secondary cell to decode the bit information received from the primary cell.

Maximum number of HARQ process: which ensures that the system always has the maximum number of HARQ processes required for scheduling. In 3GPP 38.311, the maximum number of HARQ process defined by 3GPP is 16.

Fig. 3B illustrates a table of scheduling timing and HARQ RTT under various typical configurations. As seen from Fig. 3, the XP link delay may greatly influence the number of the required HARQ process. As the XP link delay gets higher, more HARQ processes are required and the possibility of causing HARQ stalling is thus increasing. In real networks, XP link delay may change and fluctuate intensely, which may pose a great impact on the UE throughput and data traffic delay.

As shown in Fig. 3A, timeslot 2 and timeslot 3 could not be scheduled due to the lack of free HARQ process. In view of this problem, a further delayed HARQ process may be reused for scheduling timeslot 2 or timeslot 3. "Reuse" here may also be known as "preempt".

Fig. 4 illustrates a schematic diagram of an HARQ scheduling procedure 400 in accordance with example embodiments of the present disclosure. Fig. 4 illustrates a new preemptive scheduling for addressing the stalling issue of the HARQ process (such as operations or steps 401 to 403 in Fig. 4) and fast HARQ retransmission performed at the MAC layer (e.g., operations or steps 404 to 405 in Fig. 4).

In the operation or step 401, the RRM scheduler assigns an HARQ process "N" to the TB K; the RLC SDU is assembled, by the layer 2 RLC', to a protocol data unit (PDU) for TB K; and the MAC PDU is stored after the TB K is transmitted, wherein the PDSCH for TB K employs the HARQ process "N".

In the operation or step 402, scheduling of other transmissions and retransmissions may be executed.

In the operation or step 403, no free HARQ processes are available for new transmission of UE. Accordingly, the RRM scheduler may assign the HARQ process "N" to a new transmission (TB P). The layer 2 RLC' assembles the RLC SDU to a protocol data unit (PDU) for TB P and the MAC PDU is stored after the TB P is transmitted, wherein the PDSCH for TB P employs the HARQ process "N".

In the operation or step 404, the UE transmits, to the layer 1, the HARQ feedback of the HARQ process "N" for the TB K. When the RRM scheduler receives a delayed HARQ NACK feedback for the TB K, or a DTX feedback, the RRM assigns, to the TB K, a new HARQ process "X" for a new transmission of the TB K, and the new transmission is transmitted to the layer 2 RLC'. At the layer 2 RLC', control information (such as RB and MCS) is updated and the TB K is retransmitted to the layer 1, wherein the PDSCH for TB K employs the HARQ process "X".

Alternatively, in the operation or step 405, the UE transmits, to the layer 1, the HARQ feedback of the HARQ process "N" for the TB K. When the RRM scheduler receives a delayed HARQ ACK feedback for the TB K, the RRM scheduler indicates the layer 2 RLC' to release the TB K, such as deleting all stored TB information.

Fig. 5 illustrates an example of redefinition of the state of the HARQ process in accordance with example embodiments of the present disclosure. As shown in Fig. 5, blocks filled with different patterns indicate the HARQ processes under various states.

Among the illustrated HARQ processes in various states, a free HARQ process indicates an HARQ process in free state and available for transmission. A delayed (stalled) HARQ process denotes an HARQ process with an HARQ ACK/NACK feedback time greater than a non-stalling duration of the HARQ process and smaller than or equal to a duration of the whole HARQ process. A preemptive HARQ process represents an HARQ process obtained by preempting other delayed HARQ processes. A preempted HARQ process indicates an HARQ process preempted for other data transmissions. A pending HARQ process represents an HARQ process with on-going data transmission.

In some embodiments, the non-stalling duration of the HARQ process may be calculated according to following formula:

non- stalling duration of HARQ process = timing advance + downlink HARQ feedback window (i.e., K1) + layer 1 receiving window + HARQ processing delay + delay of XP link for HARQ ACK/NACK exchange between serving cells.

In some embodiments, the duration of the whole HARQ process may be calculated according to the following formula:

duration of whole HARQ process = non-stalling duration of HARQ process + timing offset, wherein the time offset indicates level of tolerance of scheduler to additional delay.

It is noted that the non-stalling duration of the HARQ process and the duration of the whole HARQ are both calculated starting from the time when initial transmission/retransmission is performed.

Fig. 6 illustrates an exemplary procedure 600 of HARQ preemptive scheduling in accordance with example embodiments of the present disclosure. As shown in Fig. 6, when new data have arrived or existing data packets are waiting to be transmitted at block 601, the RRM scheduler will perform scheduling according to the priority of the user equipment.

At block 602, when the user equipment has been scheduled to the current timeslot, it will firstly check whether some retransmission of high priorities are waiting to be scheduled; if not, new transmission scheduling will be prepared.

At block 603, the RRM scheduler checks whether there is a free HARQ process; if yes, the procedure proceeds to block 604. At block 604, the new transmission is scheduled based on the normal HARQ process; otherwise, the procedure proceeds to block 605.

At block 605, the RRM scheduler will choose the stalled HARQ process to preemptively schedule new data transmission. Meanwhile, the RRM scheduler will store the related information of the preempted HARQ process and the related information of the previous TB. The preempted HARQ process would maintain an HARQ feedback timer, waiting for the HARQ feedback to the preempted HARQ process.

To be noted, when the HARQ process is scheduled, the timer is always started with a value of the duration of the whole HARQ process (i.e., the value of "Whole_HARQ_Process duration"). The timer will stop when the HARQ feedback is received, or when the timer is expired.

In some embodiments, an HARQ process can be preempted when the following conditions are satisfied:

Firstly, all HARQ processes of the user equipment have been exhausted.
Secondly, at least one HARQ process of the UE is the delayed HARQ process.
Thirdly, the UE has new data transmission waiting to be scheduled in the buffer area.
Fourthly, the first stalled HARQ process in multiple HARQ processes or the HARQ process associated with the transmission of low priority in multiple transmissions is preempted preferentially.
Finally, the HARQ process related to SRB/GBR data should not be preempted.

At block 606, the RRM scheduler may reuse the preempted HARQ process for scheduling new transmissions.

At block 607, the RRM scheduler transmits the scheduling result at block 606 to the RLC, so as to use the selected HARQ process for constructing a new TB.

Fig. 7 illustrates an exemplary procedure 700 of fast HARQ retransmission in accordance with the example embodiments of the present disclosure. As shown in Fig. 7, at block 701, the TB K is transmitted to the UE and it is expected to receive the HARQ feedback at TTI n; the HARQ process m is used here.

At block 702, after the HARQ feedback is received, it is checked whether the feedback time has already expired with respect to the preemption offset. If not, the procedure proceeds to block 703, at which the HARQ feedback of the HARQ process may be process as normal; otherwise, the procedure proceeds to block 704.

At block 704, it may be checked whether the HARQ process is preempted. If the HARQ process is not preempted, the procedure proceeds to block 703; otherwise, the procedure proceeds to block 705.

At block 705, the HARQ feedback result for the preempted HARQ process may be checked. If the feedback is a positive acknowledgement (ACK), the procedure proceeds to block 706. At block 706, the TB index associated with the preempted HARQ process is indicated to the RLC, and the RLC directly releases the TB buffer. Otherwise, the TB of the preempted HARQ process will be regarded as blocked TB, and the procedure proceeds to block 707. At block 707, fast MAC PDU retransmission is triggered.

It is to be noted that in some embodiments, when an HARQ waiting timer associated with the preempted HARQ process expires, the procedure directly proceeds to block 707, i.e., fast MAC PDU retransmission is triggered.

In the fast MAC PDU retransmission, the blocked TB may be scheduled based on scheduling priority of the terminal device, and scheduling priority of the blocked TB in the terminal device. Alternatively, the scheduling of the blocked TB may further be performed based on link state, physical resource block (PRB) availability, and size of the previously used transmission block.

In addition, in some embodiments, the redundant version (RV) of the TB may be set as a value corresponding to new transmission, e.g., 0. Since this TB is no longer in the UE-end buffer, it may be considered as new data of the gNB end.

In some embodiments, layer 1 is instructed to transmit the PDCCH, as a new transmission, to the UE. The RLC' is directly instructed to transmit the blocked TB to the layer 1, and the RLC then retransmits the MAC PDU to the layer 1, so as to encode the PDSCH and transmit it to the UE.

Various advantageous technical effects can be achieved by utilizing the above described technical solutions of the embodiments of the present disclosure. First of all, the resource utilization rate is improved in the case of insufficient HARQ processes. When no HARQ process is available, the delayed HARQ process is reused in time to schedule existing or new incoming data packets, which optimizes the resource utilization rate, and improves throughput and reduces latency significantly.

Then, accelerated retransmission of the preempted HARQ process is achieved. When the HARQ process is suspended and the NACK feedback is received, the related MAC PDU is quickly retransmitted according to the previous transmission information. This active scheduling method eliminates the need for triggering retransmission with respect to the RLC state, reducing the overall delay in the transmission cycle. By mitigating the negative impact of the HARQ stalling, continuous data flow is guaranteed and the overall network performance is enhanced. Meanwhile, 5G networks benefit significantly from fast retransmissions, thereby reducing end-to-end delay and possibly improving TCP throughput.

Moreover, throughput and transmission efficiency are improved. The preemptive scheduling mechanism improves the overall system throughput by minimizing the free time of the HARQ process and effectively managing packet retransmission. Such improvements lead to better utilization distribution and higher transmission efficiency in the networks.

Fig. 8 illustrates throughput gain over conventional techniques in accordance with example embodiments of the present disclosure. Theoretical improvements of the throughput performance can be achieved by applying the present disclosure to the typical product configuration shown in Fig. 3B. Particularly, the throughput gain can be up to 20% for the product with configuration index 9 according to Fig. 8. In addition to the listed typical configurations, a higher gain may be achieved as the delay increases.

Fig. 9 illustrates a flowchart of an example method 900 implemented at an apparatus (e.g., first network device 121 shown in Fig. 1A) in accordance with some embodiments of the present disclosure. For the purposes of discussion, the method 900 will be described from the perspective of the apparatus 121 (i.e., first network device 121) with reference to Fig. 1A.

As shown in Fig. 9, the method may comprise: at block 910, determining that first data is to be transmitted to a terminal device. The method may further comprise: at block 920, reusing a first hybrid automatic retransmission request (HARQ) process in a stalled state to transmit the first data to the terminal device based on determining that there is no free HARQ process for transmitting the first data.

In some embodiments, the method may further comprise: storing second data transmitted previously using the first HARQ process based on reusing the first HARQ process to transmit the first data.

In some embodiments, the method may further comprise: deleting the stored second data based on determining that HARQ feedback for the second data received from the terminal device is an acknowledgement (ACK).

In some embodiments, the method may further comprise: deleting the stored second data by: indicating an index of a transmission block (TB) associated with the second data to a radio link control (RLC) layer of the apparatus by a radio resource management (RRM) scheduler of the apparatus; and releasing a buffer associated with the TB by the RLC layer.

In some embodiments, the method may further comprise: triggering retransmission of the stored second data at a media access control (MAC) layer based on determining that HARQ feedback for the second data received from the terminal device is a negative acknowledgement (NACK) or the HARQ feedback is not received from the terminal device.

In some embodiments, the method may further comprise: retransmitting the second data by: retransmitting the second data, as a new transmission, to the terminal device using a second HARQ process.

In some embodiments, the method may further comprise: retransmitting the second data by: selecting to perform scheduling of a TB associated with the second data based on a scheduling priority of the terminal device and a scheduling priority of the TB in the terminal device; scheduling the TB based on a link state, physical resource block (PRB) availability and a transmission block size previously used; assigning the second HARQ process to the TB; and setting a redundant version (RV) of the TB to a value corresponding to the new transmission.

In some embodiments, the method may further comprise: retransmitting the second data by: indicating, by an RRM scheduler of the apparatus, a physical layer of the apparatus to perform a physical downlink control channel (PDCCH) transmission associated with the second data, as a new transmission, to the terminal device; indicating, by the RRM scheduler, an RLC layer of the apparatus to send a TB associated with the second data to the physical layer of the apparatus; and resending, by the RLC layer, a stored MAC layer protocol data unit (MAC PDU) associated with the second data to the physical layer.

In some embodiments, the method may further comprise: determining that the first HARQ process is in the stalled state based on determining that HARQ feedback time of the first HARQ process is greater than a first duration and smaller than a second duration.

In some embodiments, the first duration includes at least one of: a schedule advance; a downlink HARQ feedback window; a layer 1 (L1) receiving window; an HARQ process delay; or an XP link delay for HARQ feedback exchange between multiple serving cells of the terminal device.

In some embodiments, the second duration includes the first duration and a timing offset relative to the first duration.

In some embodiments, the method may further comprise: triggering retransmission of the stored second data at a MAC layer based on determining that the HARQ feedback time is greater than the second duration.

In some embodiments, the method may further comprise: determining whether the first HARQ process is in the stalled state based on receiving HARQ feedback of the first HARQ process from the terminal device; determining whether the first HARQ process is reused based on determining that the first HARQ process is in the stalled state; and determining whether the HARQ feedback is an ACK or a NACK based on determining that the first HARQ process is reused.

In some embodiments, the method may further comprise: maintaining running of an HARQ feedback timer of the first HARQ process for transmitting the second data based on reusing the first HARQ process to transmit the first data.

In some embodiments, the method may further comprise: based on determining that there are multiple HARQ processes in the stalled state, selecting, from the multiple HARQ processes, a target HARQ process as the first HARQ process to be reused based on at least one of: (i) time sequence of occurrence of the stalled state of the multiple HARQ processes, or (ii) multiple priorities of multiple data associated with the multiple HARQ processes.

In some embodiments, the method may further comprise: based on determining that an HARQ process in the stalled state is associated with at least one of signaling radio bearer (SRB) data or guaranteed bit rate (GBR) data, refraining from determining the HARQ process as the first HARQ process to be reused.

In some embodiments, the apparatus may provide the primary cell of the inter-base station carrier aggregation for the terminal device. Alternatively, the apparatus may further provide the primary cell and the secondary cell of the intra-base station carrier aggregation for the terminal device. Alternatively, the apparatus may further provide a non-carrier aggregation cell for the terminal device.

In some embodiments, the apparatus may include a base station. Alternatively, the apparatus may include a chip of the base station.

In some embodiments, the apparatus (such as first network device 121 shown in Fig. 1A) capable of executing the method 900 may include means for executing corresponding steps of the method 900. The means may be implemented in any suitable forms. For example, the means may be implemented in the circuit or the software module.

In some embodiments, the apparatus comprises: means for determining that first data is to be transmitted to a terminal device; and means for reusing a first hybrid automatic retransmission request (HARQ) process in a stalled state to transmit the first data to the terminal device based on determining that there is no free HARQ process for transmitting the first data.

In some embodiments, the apparatus further comprises: means for storing second data transmitted previously using the first HARQ process based on reusing the first HARQ process to transmit the first data.

In some embodiments, the apparatus further comprises: means for deleting the stored second data based on determining that HARQ feedback for the second data received from the terminal device is an acknowledgement (ACK).

In some embodiments, the apparatus further comprises: means for deleting the stored second data by: indicating an index of a transmission block (TB) associated with the second data to a radio link control (RLC) layer of the apparatus by a radio resource management (RRM) scheduler of the apparatus; and releasing a buffer associated with the TB by the RLC layer.

In some embodiments, the apparatus further comprises: means for triggering retransmission of the stored second data at a media access control (MAC) layer based on determining that HARQ feedback for the second data received from the terminal device is a negative acknowledgement (NACK) or the HARQ feedback is not received from the terminal device.

In some embodiments, the apparatus further comprises: means for retransmitting the second data by: retransmitting the second data, as a new transmission, to the terminal device using a second HARQ process.

In some embodiments, the apparatus further comprises: means for retransmitting the second data by: selecting to perform scheduling of a TB associated with the second data based on a scheduling priority of the terminal device and a scheduling priority of the TB in the terminal device; scheduling the TB based on a link state, physical resource block (PRB) availability and a transmission block size previously used; assigning the second HARQ process to the TB; and setting a redundant version (RV) of the TB to a value corresponding to the new transmission.

In some embodiments, the apparatus further comprises: means for retransmitting the second data by: indicating, by an RRM scheduler of the apparatus, a physical layer of the apparatus to perform a physical downlink control channel (PDCCH) transmission associated with the second data, as a new transmission, to the terminal device; indicating, by the RRM scheduler, an RLC layer of the apparatus to send a TB associated with the second data to a physical layer of the apparatus; and resending, by the RLC layer, a stored MAC layer protocol data unit (MAC PDU) associated with the second data to the physical layer.

In some embodiments, the apparatus further comprises: means for determining that the first HARQ process is in the stalled state based on determining that HARQ feedback time of the first HARQ process is greater than a first duration and smaller than a second duration.

In some embodiments, the first duration includes at least one of: a schedule advance; a downlink HARQ feedback window; a layer 1 (L1) receiving window; an HARQ process delay; or an XP link delay for HARQ feedback exchange between multiple serving cells of the terminal device.

In some embodiments, the second duration includes the first duration and a timing offset relative to the first duration.

In some embodiments, the apparatus further comprises: means for triggering retransmission of the stored second data at a MAC layer based on determining that the HARQ feedback time is greater than the second duration.

In some embodiments, the apparatus further comprises: means for determining whether the first HARQ process is in the stalled state based on receiving HARQ feedback of the first HARQ process from the terminal device; means for determining whether the first HARQ process is reused based on determining that the first HARQ process is in the stalled state; and means for determining whether the HARQ feedback is an ACK or a NACK based on determining that the first HARQ process is reused.

In some embodiments, the apparatus may further comprises: means for maintaining running of an HARQ feedback timer of the first HARQ process for transmitting the second data based on reusing the first HARQ process to transmit the first data.

In some embodiments, the apparatus further comprises means for selecting, from the multiple HARQ processes, a target HARQ process as the first HARQ process to be reused based on at least one of: (i) time sequence of occurrence of the stalled state of the multiple HARQ processes, or (ii) multiple priorities of multiple data associated with the multiple HARQ processes, based on determining that there are multiple HARQ processes in the stalled state.

In some embodiments, the apparatus further comprises means for refraining from determining the HARQ process as the first HARQ process to be reused based on determining that an HARQ process in the stalled state is associated with at least one of signaling radio bearer (SRB) data or guaranteed bit rate (GBR) data.

In some embodiments, the apparatus may provide the primary cell of the inter-base station carrier aggregation for the terminal device. Alternatively, the apparatus may further provide the primary cell and the secondary cell of the intra-base station carrier aggregation for the terminal device. Alternatively, the apparatus may further provide a non-carrier aggregation cell for the terminal device.

In some embodiments, the apparatus may include a base station. Alternatively, the apparatus may include a chip of the base station.

In some embodiments, the apparatus further comprises means for executing other steps of some embodiments of the method 900. In some embodiments, the means include at least one processor and at least one memory including computer program codes. The at least one memory and the compute program codes are configured, together with the at least one processor, to enable execution of the apparatus.

Fig. 10 is a simplified block diagram of a device 1000 suitable for implementing some example embodiments of the present disclosure. The device 1000 may be a device provided to implement a communication device, such as, for example, the first network device 121, the second network device 122 or the terminal device shown in Fig. 1A. As illustrated, the device 1000 includes one or more processors 1010, one or more memories 1020 coupled to the processor 1010, and one or more communication modules 1040 coupled to the processor 1010.

The communication module 1040 is used for bidirectional communications. The communication module 1040 has at least one antenna to facilitate communication. The communication interface may represent any interfaces required for communication with other network elements.

The processor 1010 may be of any types suitable for local technology network and may include one or more of the following: general purpose computers, special purpose computers, microprocessors, digital signal processors, and processors based on multi-core processor architecture, as non-limiting examples. The device 1000 may have multiple processors, such as an application specific integrated circuit chip that is slaved in time to a clock which synchronizes the main processor.

The memory1020 may include one or more non-volatile memories, and one or more volatile memories. Examples of non-volatile memory include, but are not limited to, read-only memory (ROM) 1024, electrically programmable read-only memory, flash memory, hard disks, optical disks, digital video disks, and other magnetic and/or optical storage. Examples of volatile memory include, but are not limited to, random access memory (RAM) 1022, and other volatile memory that does not persist for the duration of a power failure.

The computer program 1030 includes the computer-executable instructions executed by an associated processor 1010. The program 1030 may be stored in the read-only memory 1024. The processor 1010 may perform any suitable acts and processing by loading the program 1030 into the RAM 1022.

Embodiments of the present disclosure may be implemented with the aid of the program 1030, such that the device 1000 can execute any procedure of the present disclosure discussed with reference to Fig. 9. Embodiments of the present disclosure may also be implemented by hardware or software or combinations of hardware and software.

In some example embodiments, the program 1030 may be tangibly included in the computer-readable medium, which computer-readable medium may be contained in the device 1000 (e.g., memory 1020) or other storage devices accessible by the device 1000. The device may load the program 1030 from the computer-readable medium to the RAM 1022 for execution. The computer-readable medium may include any types of tangible non-volatile memory, e.g., read-only memory, programmable read-only memory, flash, hard disk, optic disk, DVD and the like.

Fig. 11 illustrates a block diagram of an example of the computer-readable medium 1100 in accordance with some example embodiments of the present disclosure. The computer-readable medium 1100 is stored thereon with a program 1030. Note that although the computer-readable medium 1100 is illustrated in the form of CD or DVD in Fig. 11, the computer-readable medium 1100 may be adapted to any other forms suitable for carrying or saving the program 1030.

In general, various embodiments of the present disclosure may be implemented by hardware, dedicated circuits, software, logic or any combinations thereof. Some aspects may be implemented by hardware while others may be implemented by firmware or software executed by controllers, microprocessors or other computing devices. Although each aspect of embodiments of the present disclosure is illustrated and described as block diagram or flowchart or represented by some other figures, it should be understood that the block, apparatus, system, technology or method described here may be implemented as hardware, software, firmware, dedicated circuits, logic, general-purpose hardware, controller, or other computing devices, or any other combinations thereof as non-restrictive examples.

The present disclosure further provides at least one computer program product stored on the non-transitory computer-readable storage medium. The computer program product includes computer-executable instructions, for example, the instructions comprised in program modules and executed in devices on a target physical or virtual processor to perform the above method 900 with reference to Fig. 9. In general, program modules comprise routines, programs, libraries, objects, classes, components, and data architecture that execute particular tasks or implement particular abstract data structure. In various embodiments, functions of the program modules may be merged or divided as required between program modules and the machine-executable instructions for program modules may be executed in local or distributed devices. In the distributed devices, program modules may be positioned either in local or remote storage media.

The computer program codes for implementing method of the present disclosure may be written in any combinations of one or more programming languages. The program codes may be provided to processors or controllers of the general-purpose computer, dedicated computer or other programmable data processing apparatuses, such that the program codes, when executed by the processor or the controller, cause the implementation of functions/operations specified in the flowchart and/or block diagram. The program codes can be executed entirely on the computer, partially on the computer, as an independent software package, partially on the computer and partially on the remote computer or entirely on the remote computer or server.

In the context of the present disclosure, the computer program codes or related data may be carried by any suitable carriers, such that the device, apparatus or processor can perform the above described various procedures and operations. Examples of the carrier include signal, computer-readable medium and the like.

The computer-executable medium may be a computer-readable signal medium or a computer-readable storage medium. The computer-readable medium may include, but not limited to, electronic, magnetic, optical, electromagnetic, infrared or semiconductor system, apparatus or device, or any suitable combinations thereof. The more specific examples of the computer-readable storage medium comprise an electrical connection including one or more wires, a portable computer disk, a hard disk, a random-access memory (RAM), a read-only memory (ROM), an erasable programmable read-only memory (EPROM or flash), an optical fiber, a portable Compact Disc Read-Only Memory (CD-ROM), an optical storage device, a magnetic storage device, or any suitable combinations thereof. The term "non-transient" used herein is a limitation to the medium per se (i.e., tangible rather than signal), instead of a limitation to persistence of data storage (such as random-access memory and read-only memory).

Furthermore, although the operations are depicted in a particular order, it does not suggest that the operations are required to be executed in the particular order, or all operations shown should be executed to obtain the expected result. In some cases, multitasking or multiprocessing is also beneficial. Likewise, although the above description comprises some particular implementation details, they should not be interpreted as limiting the scope of the present disclosure. On the contrary, they should be appreciated as description for features specific to particular embodiments. Some features described separately in the context of the embodiments of the description can also be integrated and implemented in a single embodiment. Conversely, all kinds of features described in the context of a single embodiment can also be separately implemented in multiple embodiments or in any suitable sub-combinations.

Although the subject matter has been described in languages specific to structural features and/or method actions, it should be understood that the subject matter defined in the attached claims is not limited to the above described particular features or actions. On the contrary, the above described specific features and actions are disclosed for implementing examples of the claims.

## Claims

1. An apparatus comprising:

   means for determining that first data is to be transmitted to a terminal device; and
   means for reusing a first hybrid automatic retransmission request (HARQ) process in a stalled state to transmit the first data to the terminal device based on determining that there is no free HARQ process for transmitting the first data.

2. The apparatus of claim 1, wherein the apparatus further comprising:
   means for store second data transmitted previously using the first HARQ process based on reusing the first HARQ process to transmit the first data.

3. The apparatus of claim 2, wherein the apparatus further comprising:
   means for delete the stored second data based on determining that HARQ feedback for the second data received from the terminal device is an acknowledgement (ACK).

4. The apparatus of claim 2, wherein the apparatus further comprising:
   means for trigger retransmission of the stored second data at a media access control (MAC) layer based on determining that HARQ feedback for the second data received from the terminal device is a negative acknowledgement (NACK) or the HARQ feedback is not received from the terminal device.

5. The apparatus of claim 4, wherein the apparatus further comprising :
   means for retransmitting the second data, as a new transmission, to the terminal device using a second HARQ process.

6. The apparatus of claim 5, wherein the apparatus further comprising:

   means for selecting to perform scheduling of a TB associated with the second data based on a scheduling priority of the terminal device and a scheduling priority of the TB in the terminal device;
   scheduling the TB based on a link state, physical resource block (PRB) availability and a transmission block size previously used;
   assigning the second HARQ process to the TB; and
   setting a redundant version (RV) of the TB to a value corresponding to the new transmission.

7. The apparatus of any of claims 4 to 6, wherein the apparatusfurther comprising:

   means for indicating, by an RRM scheduler of the apparatus, a physical layer of the apparatus to perform a physical downlink control channel (PDCCH) transmission associated with the second data, as a new transmission, to the terminal device;
   means for indicating, by the RRM scheduler, an RLC layer of the apparatus to send a TB associated with the second data to the physical layer of the apparatus; and
   means for resending, by the RLC layer, a stored MAC layer protocol data unit (MAC PDU) associated with the second data to the physical layer.

8. The apparatus of any of claims 1 to 7, wherein the apparatus further comprising:
   means for determining that the first HARQ process is in the stalled state based on determining that HARQ feedback time of the first HARQ process is greater than a first duration and smaller than a second duration.

9. The apparatus of claim 8, wherein the first duration comprises at least one of the following:

   a schedule advance;
   a downlink HARQ feedback window;
   a layer 1 (L1) receiving window;
   an HARQ process delay; or
   an XP link delay for HARQ feedback exchange between serving cells of the terminal device.

10. The apparatus of claim 8 or 9, wherein the second duration comprises the first duration and a timing offset relative to the first duration.

**11.** The apparatus of any of claims 8 to 10, wherein the apparatus further comprising:
means for triggering retransmission of the stored second data at a MAC layer based on determining that the HARQ feedback time is greater than the second duration.

**12.** The apparatus of any of claims 1 to 11, wherein the apparatus further comprising:
means for , based on determining that there are multiple HARQ processes in the stalled state, selecting, from the multiple HARQ processes, a target HARQ process as the first HARQ process to be reused, based on at least one of: (i) time sequence of occurrence of the stalled state of the multiple HARQ processes, or (ii) multiple priorities of multiple data associated with the multiple HARQ processes.

**13.** The apparatus of any of claims 1 to 12, wherein:

the apparatus provides a primary cell of inter-base station carrier aggregation for the terminal device; or
the apparatus provides a primary cell and a secondary cell of intra-base station carrier aggregation for the terminal device; or
the apparatus provides a non-carrier aggregation cell for the terminal device.

**14.** A method comprising:

determining that first data is to be transmitted to a terminal device; and
reusing a first hybrid automatic retransmission request (HARQ) process in a stalled state to transmit the first data to the terminal device based on determining that there is no free HARQ process for transmitting the first data.

**15.** A computer-readable medium comprising program instructions stored thereon, the program instructions are used for performing at least the method of claim 14.

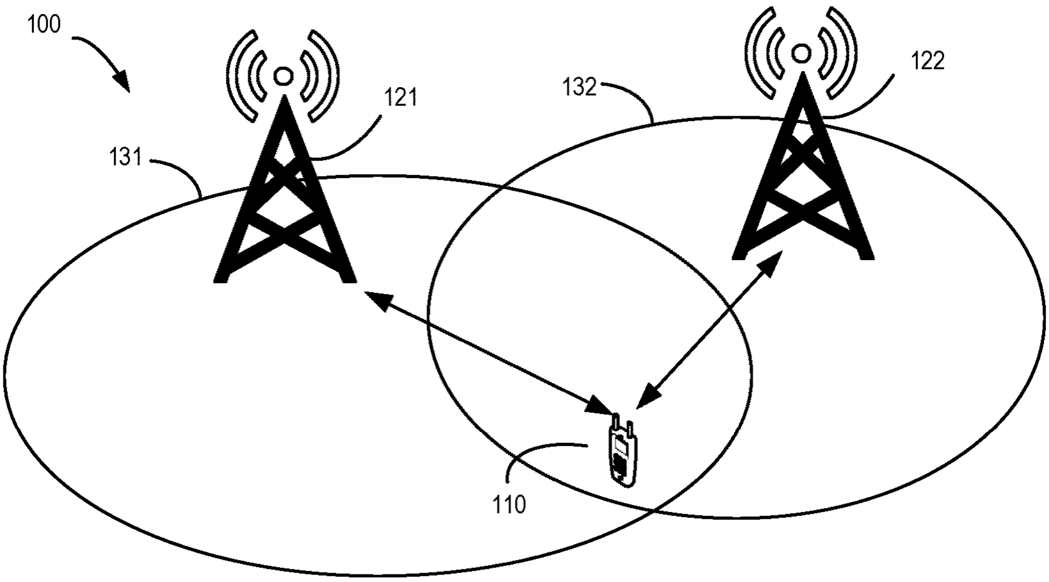
100
121
122
131
132
110

FIG. 1A

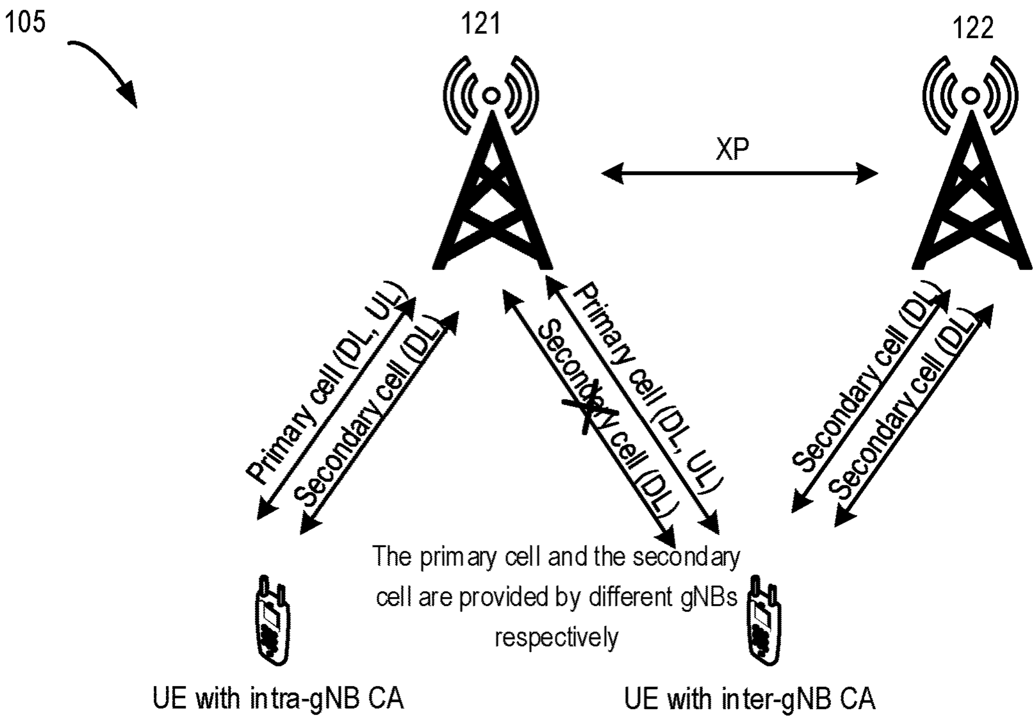
105
121
122
XP
Primary cell (DL, UL)
Secondary cell (DL)
Secondary cell (DL)
Primary cell (DL, UL)
Secondary cell (DL)
Secondary cell (DL)
The primary cell and the secondary cell are provided by different gNBs respectively
UE with intra-gNB CA
UE with inter-gNB CA

FIG. 1B

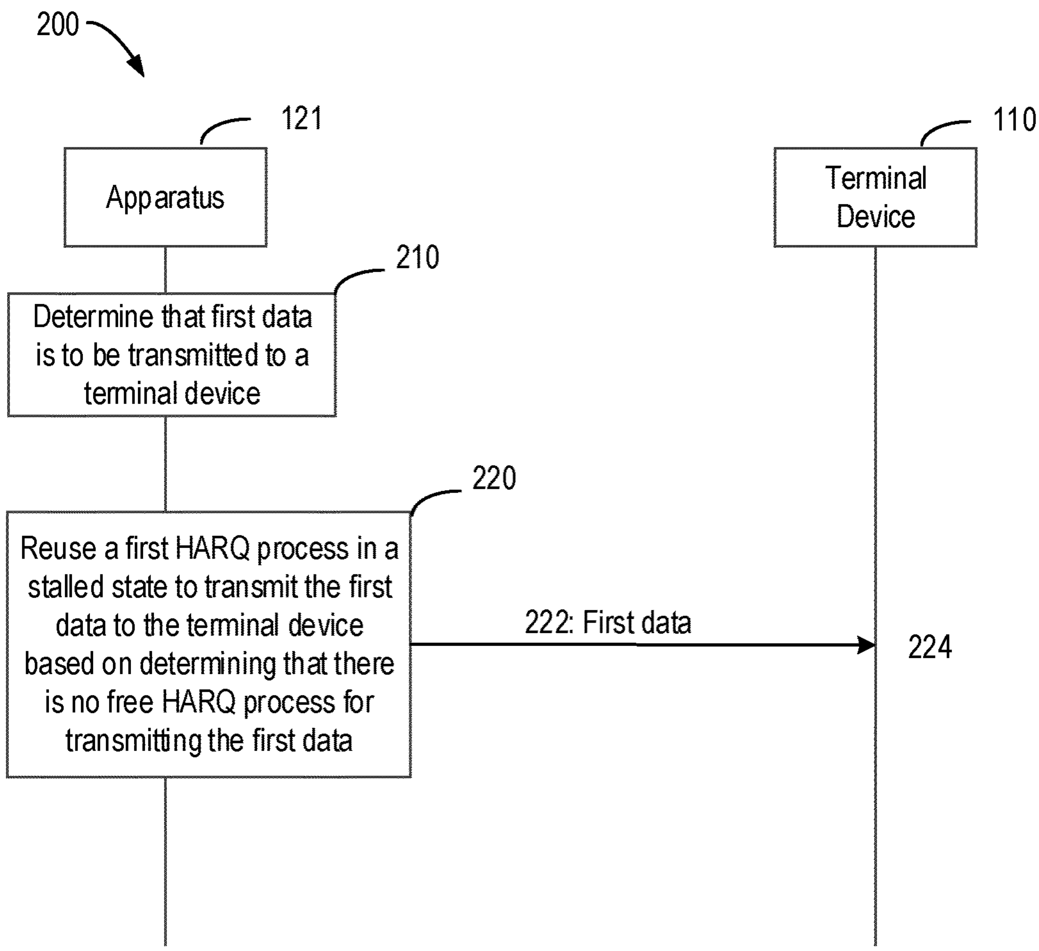
200
121
Apparatus
110
Terminal Device
210
Determine that first data is to be transmitted to a terminal device
220
Reuse a first HARQ process in a stalled state to transmit the first data to the terminal device based on determining that there is no free HARQ process for transmitting the first data
222: First data
224

FIG. 2

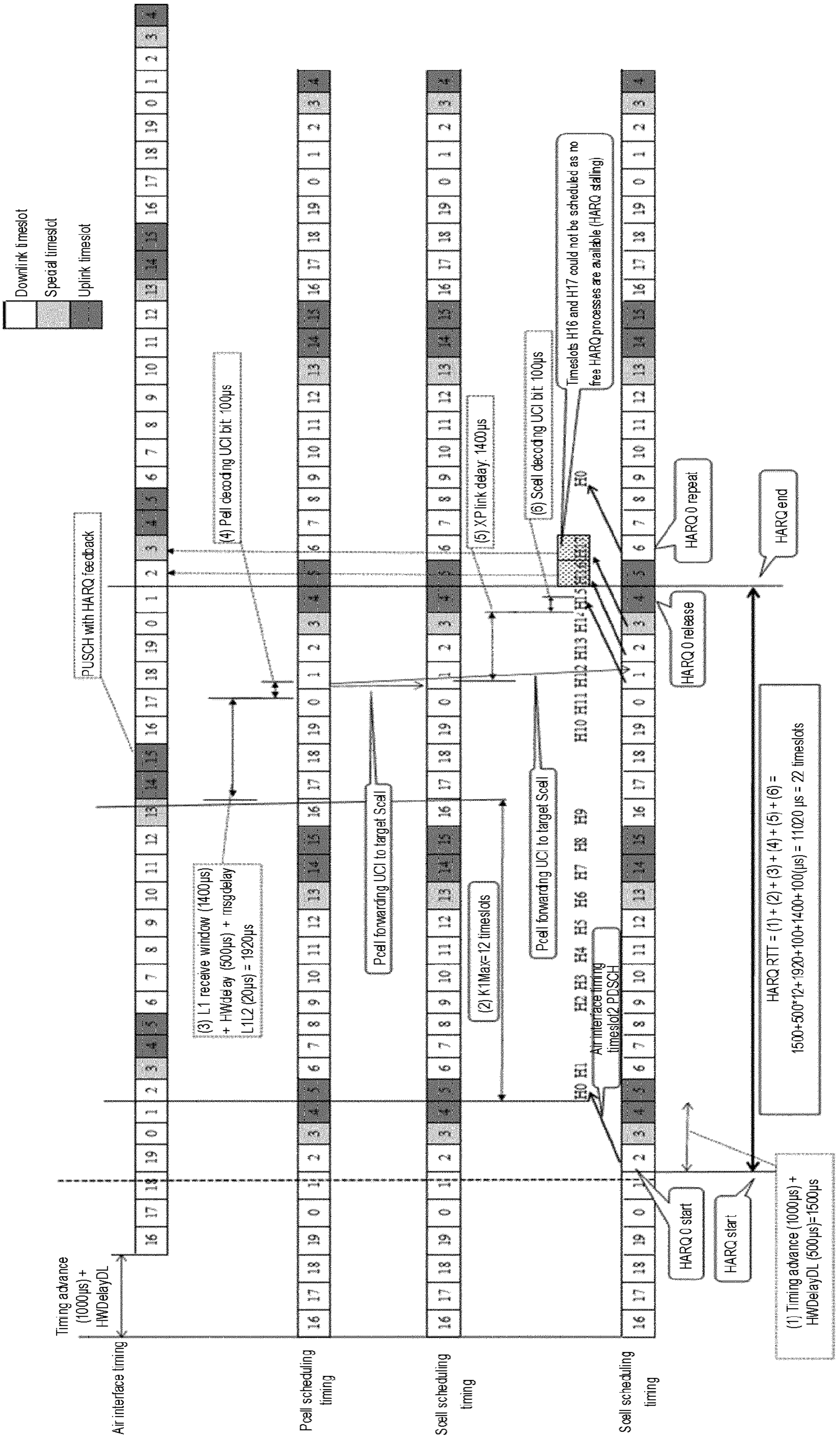
Downlink timeslot
Special timeslot
Uplink timeslot
Air interface timing
Pcell scheduling timing
Scell scheduling timing
Scell scheduling timing
Timing advance (1000μs) + HWDelayDL
PUSCH with HARQ feedback
(4) Pcell decoding UCI bit: 100μs
(3) L1 receive window (1400μs) + HWdelay (500μs) + msgdelay L1L2 (20μs) = 1920μs
Pcell forwarding UCI to target Scell
(2) K1Max=12 timeslots
(5) XP link delay: 1400μs
Pcell forwarding UCI to target Scell
(6) Scell decoding UCI bit: 100μs
Timeslots H16 and H17 could not be scheduled as no free HARQ processes are available (HARQ stalling)
Air interface timing timeslot2 PDSCH
HARQ 0 start
HARQ start
HARQ 0 release
HARQ 0 repeat
HARQ end
(1) Timing advance (1000μs) + HWDelayDL (500μs)=1500μs
HARQ RTT = (1) + (2) + (3) + (4) + (5) + (6) = 1500+500*12+1920+100+1400+100(μs) = 11020 μs = 22 timeslots

Fig. 3A

| Configuration index | Scheduling advance (μs) | HWDelayDL (μs) | Max K1 (timeslot) | L1 receive window (us) | HWDelayUL (us) | msgL1L2delay (μs) | XP link delay (μs) | Max message process delay (μs) | Harq RTT (μs) | Harq RTT (timeslot) | Max number of HARQ (required) |
|---|---|---|---|---|---|---|---|---|---|---|---|
| 1 | 1000 | 340 | 12 | 1000 | 340 | 20 | 700 | 200 | 9600 | 19.2 | **16** |
| 2 | 1000 | 340 | 13 | 900 | 340 | 20 | 700 | 200 | 10000 | 20 | **16** |
| 3 | 1000 | 340 | 12 | 1900 | 340 | 20 | 700 | 200 | 10500 | 21 | **17** |
| 4 | 1000 | 340 | 13 | 1900 | 340 | 20 | 700 | 200 | 11000 | 22 | **18** |
| 5 | 1000 | 340 | 14 | 900 | 340 | 20 | 700 | 200 | 10500 | 21 | **17** |
| 6 | 1000 | 340 | 14 | 1900 | 340 | 20 | 700 | 200 | 11500 | 23 | **19** |
| 7 | 1000 | 340 | 12 | 900 | 340 | 20 | 1600 | 200 | 10400 | 20.8 | **17** |
| 8 | 1000 | 500 | 12 | 1380 | 500 | 20 | 1400 | 200 | 11000 | 22 | **18** |
| 9 | 1000 | 340 | 12 | 1900 | 340 | 20 | 1800 | 200 | 11600 | 23.2 | **20** |
| 10 | 1000 | 500 | 12 | 1380 | 500 | 20 | 1400 | 200 | 11000 | 22 | **18** |

Fig. 3B

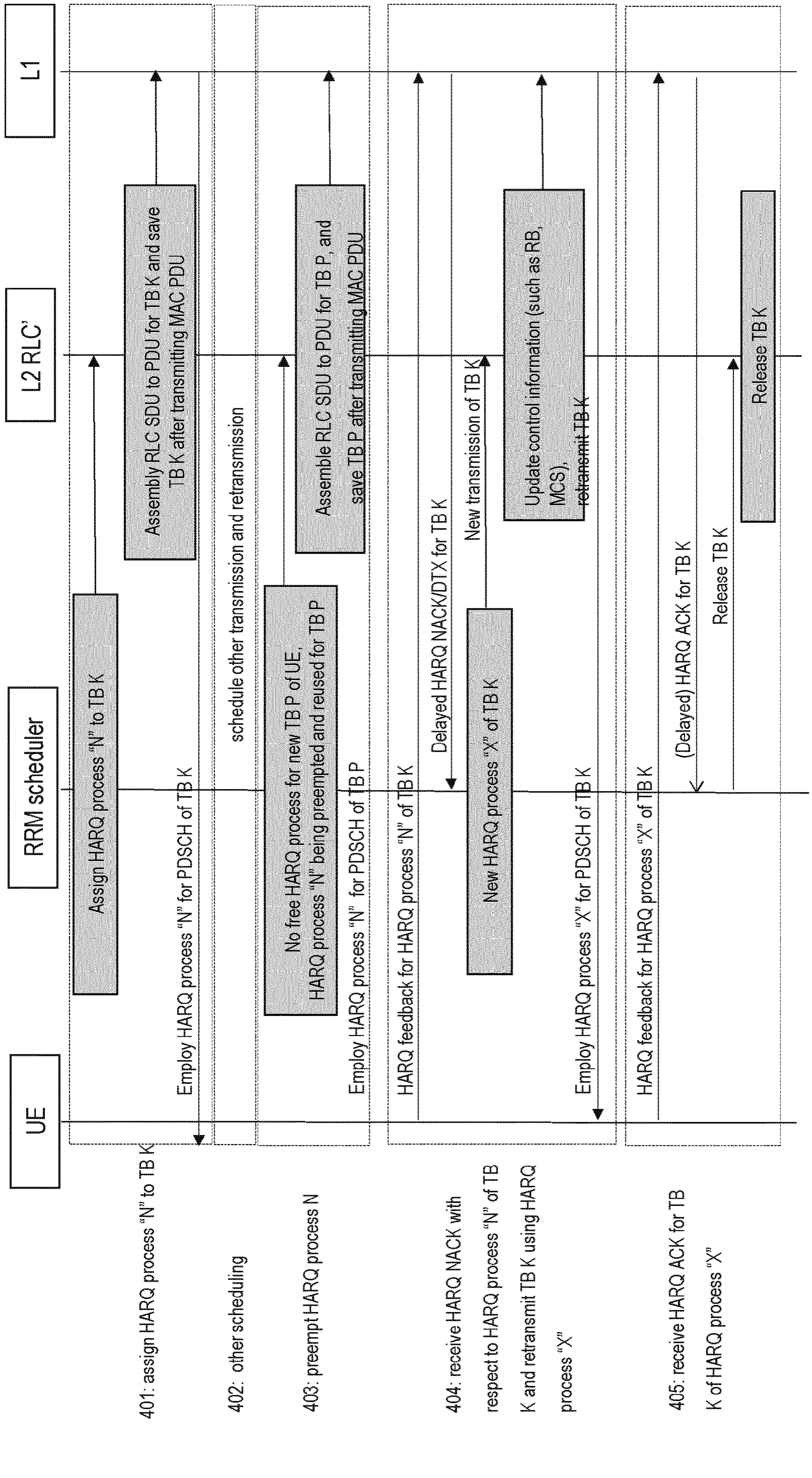
UE
RRM scheduler
L2 RLC'
L1
401: assign HARQ process "N" to TB K
Assign HARQ process "N" to TB K
Assembly RLC SDU to PDU for TB K and save TB K after transmitting MAC PDU
Employ HARQ process "N" for PDSCH of TB K
402: other scheduling
schedule other transmission and retransmission
403: preempt HARQ process N
No free HARQ process for new TB P of UE, HARQ process "N" being preempted and reused for TB P
Assemble RLC SDU to PDU for TB P, and save TB P after transmitting MAC PDU
Employ HARQ process "N" for PDSCH of TB P
404: receive HARQ NACK with respect to HARQ process "N" of TB K and retransmit TB K using HARQ process "X"
HARQ feedback for HARQ process "N" of TB K
Delayed HARQ NACK/DTX for TB K
New HARQ process "X" of TB K
New transmission of TB K
Update control information (such as RB, MCS), retransmit TB K
Employ HARQ process "X" for PDSCH of TB K
405: receive HARQ ACK for TB K of HARQ process "X"
HARQ feedback for HARQ process "X" of TB K
(Delayed) HARQ ACK for TB K
Release TB K
Release TB K

Fig. 4

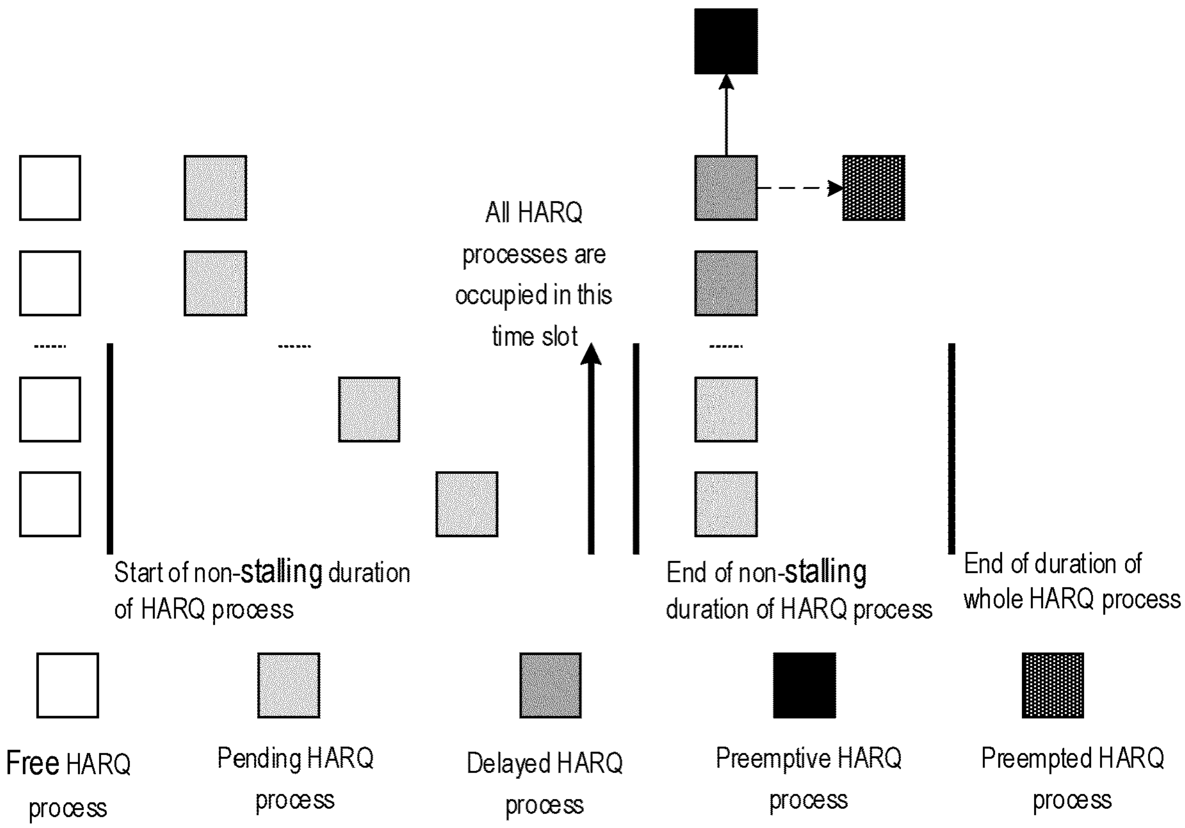
All HARQ processes are occupied in this time slot
Start of non-stalling duration of HARQ process
End of non-stalling duration of HARQ process
End of duration of whole HARQ process
Free HARQ process
Pending HARQ process
Delayed HARQ process
Preemptive HARQ process
Preempted HARQ process

FIG. 5

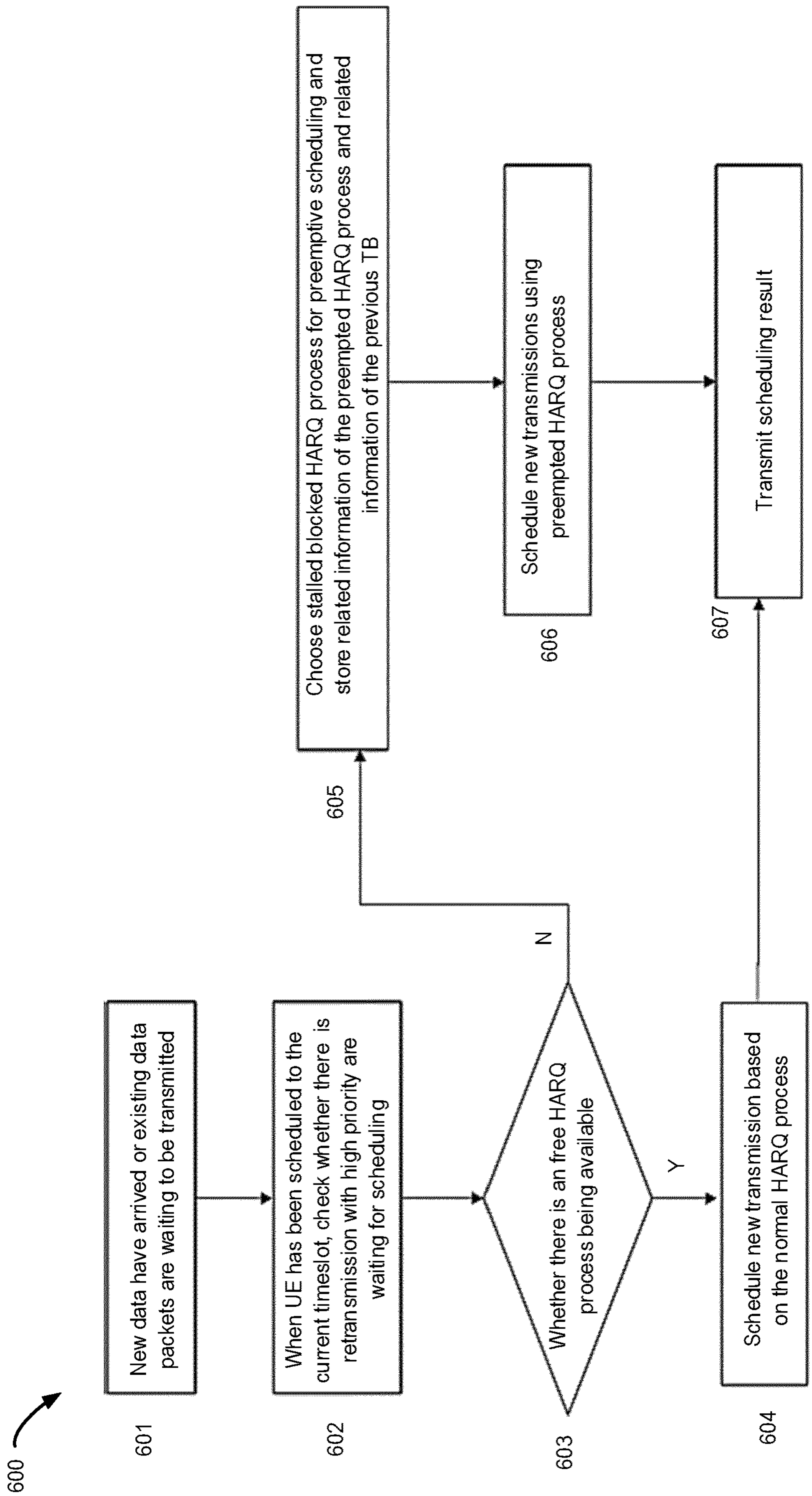
600
601
New data have arrived or existing data packets are waiting to be transmitted
602
When UE has been scheduled to the current timeslot, check whether there is retransmission with high priority are waiting for scheduling
603
Whether there is an free HARQ process being available
Y
N
604
Schedule new transmission based on the normal HARQ process
605
Choose stalled blocked HARQ process for preemptive scheduling and store related information of the preempted HARQ process and related information of the previous TB
606
Schedule new transmissions using preempted HARQ process
607
Transmit scheduling result

Fig. 6

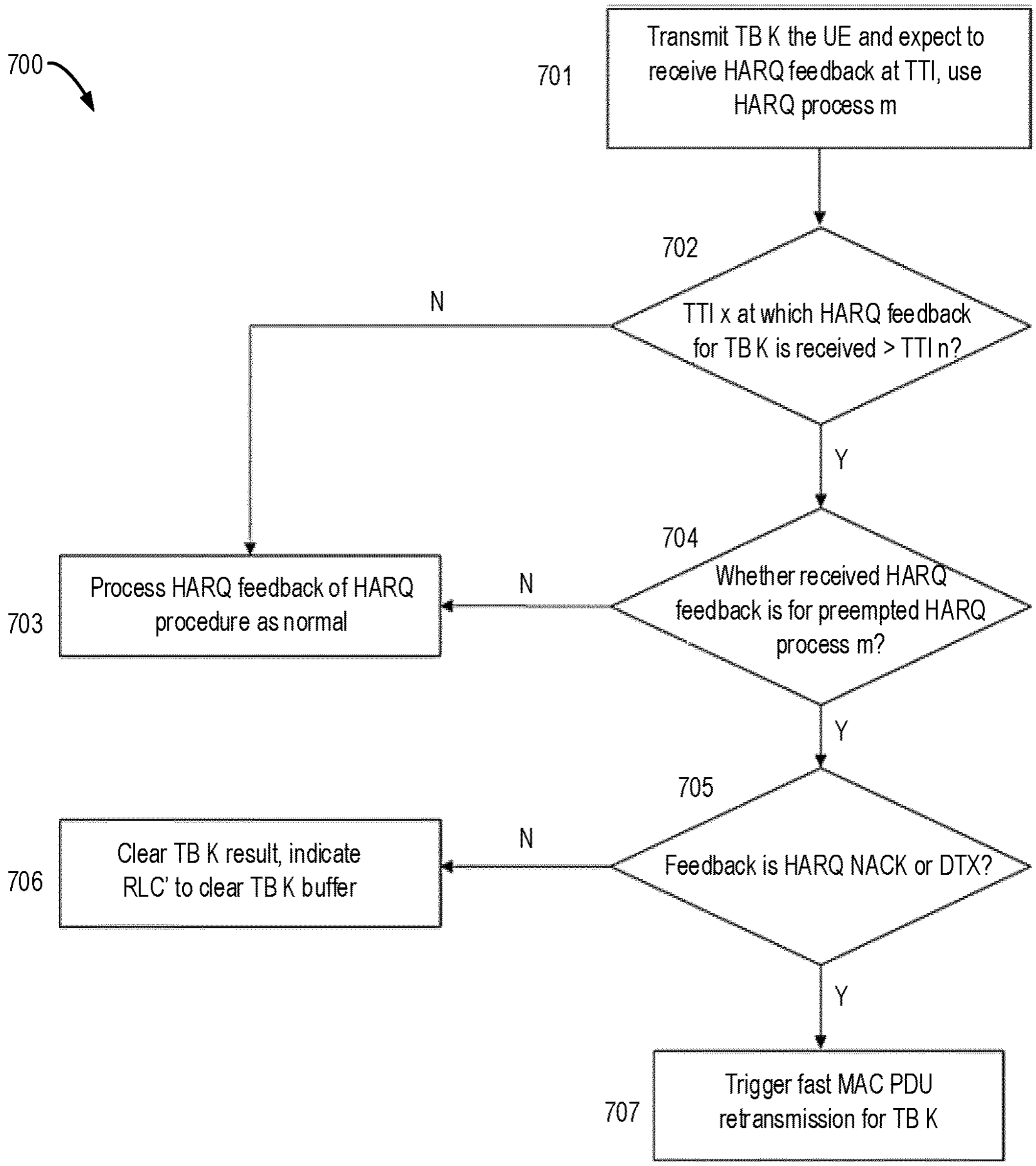
700
701
Transmit TB K the UE and expect to receive HARQ feedback at TTI, use HARQ process m
702
TTI x at which HARQ feedback for TB K is received > TTI n?
N
Y
703
Process HARQ feedback of HARQ procedure as normal
704
Whether received HARQ feedback is for preempted HARQ process m?
N
Y
705
Feedback is HARQ NACK or DTX?
N
Y
706
Clear TB K result, indicate RLC' to clear TB K buffer
707
Trigger fast MAC PDU retransmission for TB K

FIG. 7

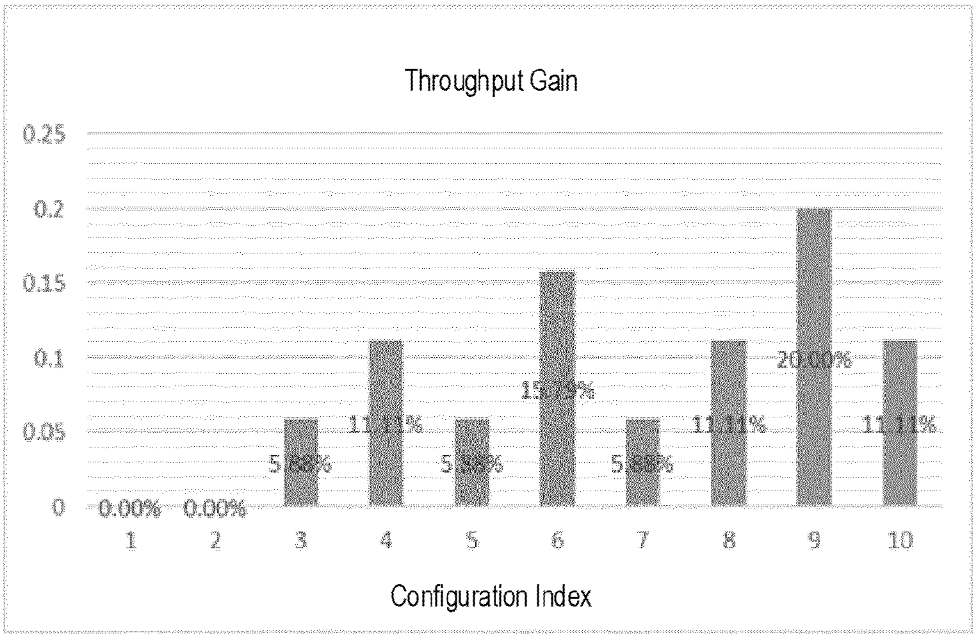
Throughput Gain
0.25
0.2
0.15
0.1
0.05
0
0.00%
0.00%
5.88%
11.11%
5.88%
15.79%
5.88%
11.11%
20.00%
11.11%
1
2
3
4
5
6
7
8
9
10
Configuration Index

FIG.8

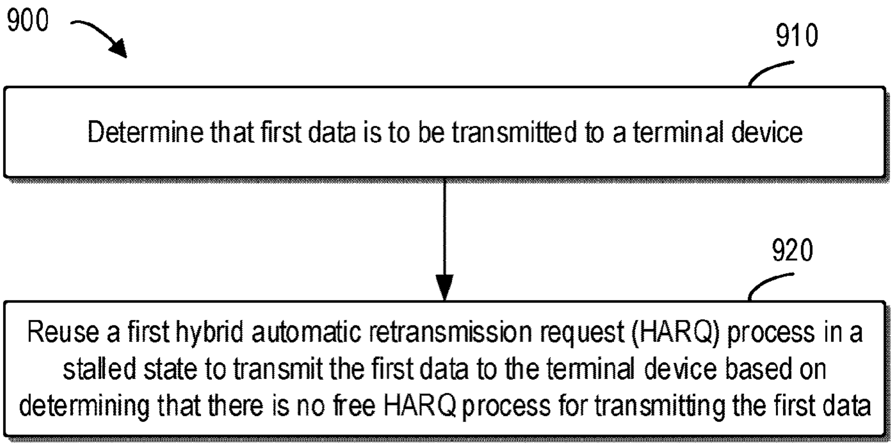
900
910
Determine that first data is to be transmitted to a terminal device
920
Reuse a first hybrid automatic retransmission request (HARQ) process in a stalled state to transmit the first data to the terminal device based on determining that there is no free HARQ process for transmitting the first data

FIG.9

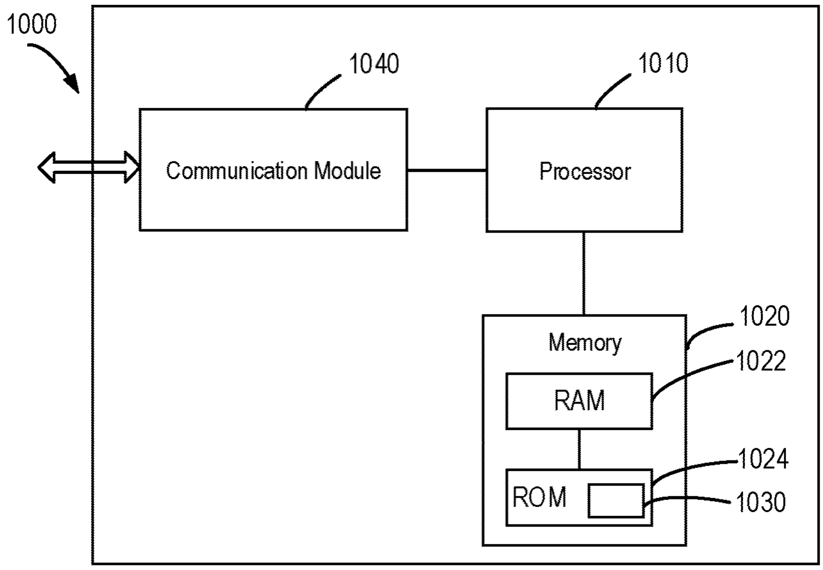
1000
1040
1010
Communication Module
Processor
Memory
1020
1022
RAM
1024
ROM
1030

FIG. 10

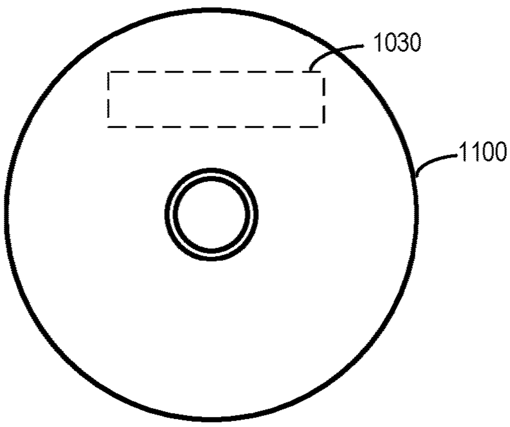
1030
1100

FIG. 11

Europäisches Patentamt
European Patent Office
Office européen des brevets

# EUROPEAN SEARCH REPORT

Application Number
EP 25 20 2453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/174161 A1 (NOKIA SHANGHAI BELL CO LTD [CN] ET AL.) 29 August 2024 (2024-08-29) * pages 1-5; figures 2A, 3, 6 * * page 9 - page 28 * ----- | 1-15 | INV. H04L1/1822 H04L1/1829 H04L1/1867 |
| X | WO 2022/246361 A1 (QUALCOMM INC [US]) 24 November 2022 (2022-11-24) * paragraphs [0052], [0070] - [0230], [0257], [0261]; claims 1, 10, 12; figures 1, 2A, 2B, 3, 4, 5A, 5B, 6, 8, 9 * ----- | 1-15 | |
| A | US 2023/247577 A1 (RICO ALVARINO ALBERTO [US] ET AL) 3 August 2023 (2023-08-03) * the whole document * ----- | 1-15 | |
| A | NOKIA ET AL: "Discussion on HARQ uplink retransmission signalling in NTN", 3GPP DRAFT; R2-2101057, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic; 20210125 - 20210205 15 January 2021 (2021-01-15), XP051974070, Retrieved from the Internet: URL:https://ftp.3gpp.org/tsg_ran/WG2_RL2/TSGR2_113-e/Docs/R2-2101057.zip R2-2101057 Discussion on HARQ uplink retransmission signalling in NTN.docx [retrieved on 2021-01-15] * the whole document * ----- | 1-15 | TECHNICAL FIELDS SEARCHED (IPC): H04L |

The present search report has been drawn up for all claims

| Place of search | Date of completion of the search | Examiner |
|---|---|---|
| The Hague | 21 February 2026 | Khirallah, Chadi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 20 2453

This annex lists the patent family members relating to the patent documents cited in the above-mentioned European search report. The members are as contained in the European Patent Office EDP file on
The European Patent Office is in no way liable for these particulars which are merely given for the purpose of information.

21-02-2026

| Patent document cited in search report | Publication date | Patent family member(s) | Publication date |
|---|---|---|---|
| WO 2024174161 A1 | 29-08-2024 | CN 120770130 A | 10-10-2025 |
| | | EP 4670434 A1 | 31-12-2025 |
| | | KR 20250149796 A | 16-10-2025 |
| | | WO 2024174161 A1 | 29-08-2024 |
| WO 2022246361 A1 | 24-11-2022 | CN 117321942 A | 29-12-2023 |
| | | EP 4342113 A1 | 27-03-2024 |
| | | US 2022376837 A1 | 24-11-2022 |
| | | WO 2022246361 A1 | 24-11-2022 |
| US 2023247577 A1 | 03-08-2023 | CN 115298973 A | 04-11-2022 |
| | | CN 118018159 A | 10-05-2024 |
| | | EP 4128577 A1 | 08-02-2023 |
| | | US 2021314892 A1 | 07-10-2021 |
| | | US 2023247577 A1 | 03-08-2023 |
| | | US 2025126584 A1 | 17-04-2025 |
| | | WO 2021201994 A1 | 07-10-2021 |

EPO FORM P0459

For more details about this annex : see Official Journal of the European Patent Office, No. 12/82